# FASCICULE DE BREVET EUROPEEN

(11) **EP 4 185 480 B1**
(45) Date de publication et mention de la délivrance du brevet: **23.04.2025**
(21) Numéro de dépôt: 21749667.8
(22) Date de dépôt: 09.07.2021
(51) Int. Cl.: B60J 1/17, E05F 11/38, B60J 1/00, B32B 17/10

(54) **VITRAGE A PORTE-VITRE FIN ET PROCEDE DE FABRICATION DUDIT VITRAGE**
VERGLASUNG MIT EINEM FENSTERHALTER IN SCHMALER BAUWEISE UND VERFAHREN ZUR HERSTELLUNG DER VERGLASUNG
GLAZING WITH WINDOW HOLDER OF THIN DESIGN, AND METHOD FOR PRODUCING SAID GLAZING

(30) Priorité: 24.07.2020 FR 2007803
(43) Date de publication de la demande: 31.05.2023
(73) Titulaire: Saint-Gobain Glass France, 92400 Courbevoie (FR)
(72) Inventeur: LAMOUREUX, Laurent, 60170 RIBECOURT-DRESLINCOURT (FR); BERTHE, Frédéric, 60170 CAMBRONNE LES RIBECOURT (FR)
(74) Mandataire: Saint-Gobain Recherche
(86) Numéro de dépôt international: PCT/FR2021/051280
(87) Numéro de publication internationale: WO 2022/018348

(56) Documents cités:
- WO-A1-2014/029605
- WO-A1-2018/178882
- WO-A1-2020/021269
- WO-A1-2021/038214

## Description

L'invention se rapporte au domaine des vitrages comportant une vitre et au moins un porte-vitre pour permettre de déplacer ladite vitre par translation.

L'invention ne se rapporte pas au domaine des vitrages dont la vitre est déplaçable par rotation.

L'invention est décrite en regard d'une application de vitrage de véhicule comprenant une vitre feuilletée comprenant alors une feuille de verre extérieure, une feuille de verre intérieure et une feuille intercalaire de matière adhésive située entre lesdites deux feuilles de verre, ladite vitre présentant une face extérieure destinée à être orientée vers un espace extérieur, un chant et une face intérieure destinée à être orientée vers un espace intérieur.

L'invention se rapporte plus particulièrement à un vitrage comportant au moins un porte-vitre présentant ou ne présentant pas un axe traversant ladite vitre par un trou ménagé dans la vitre.

L'art antérieur connaît une solution de porte-vitre de la demande internationale de brevet N° WO 2008/065310. Dans ce document, le porte-vitre présente un axe traversant la vitre par un trou, pour le passage d'une tige d'attachement, filetée. Cet orifice de passage est compliqué car il est constitué de deux orifices de tailles différentes ménagés chacun dans une des deux feuilles de verre de la vitre feuilletée. Une rondelle est disposée à l'intérieur de l'orifice le plus grand, puis un écrou est vissé sur la tige d'attachement filetée, du côté de l'orifice le plus grand.

Cette solution est susceptible d'être améliorée car à l'usage, les efforts appliqués à la vitre par le porte-vitre sont susceptibles d'endommager le feuilletage. De plus, la compacité, ainsi que le poids, peuvent être améliorés (diminués).

L'art antérieur connaît par ailleurs du document DE 3535719 un système de porte-vitre à plaque et à contre-rondelle présentant une surface externe en spirale et à trois ergots, qui doit être vissée à l'intérieur d'un élément partiellement tubulaire, en trois parties, lié à la plaque. Ce système est destiné à permettre de rattraper les tolérances mais n'est pas suffisamment fiable car en l'absence de contre-plaque, tous les efforts passent par la plaque.

L'art antérieur connaît par ailleurs du document WO 2018/178882 une zone de fixation particulière : la vitre extérieure est présente, ainsi que la feuille intercalaire de matière adhésive, mais la feuille de verre intérieure est absente.

Dans l'exemple de réalisation du vitrage illustré à la figure 9A de ce document, un insert est fixé à la feuille de verre intérieure par collage grâce à la feuille intercalaire de matière adhésive ; la feuille en verre intérieure n'est pas liée à l'insert car un espace est présent entre eux. L'insert est relativement fin (son épaisseur est celle de la feuille de verre intérieure) ; il risque de ne pas être suffisamment solide pour attacher d'une manière fiable le vitrage au système assurant son déplacement.

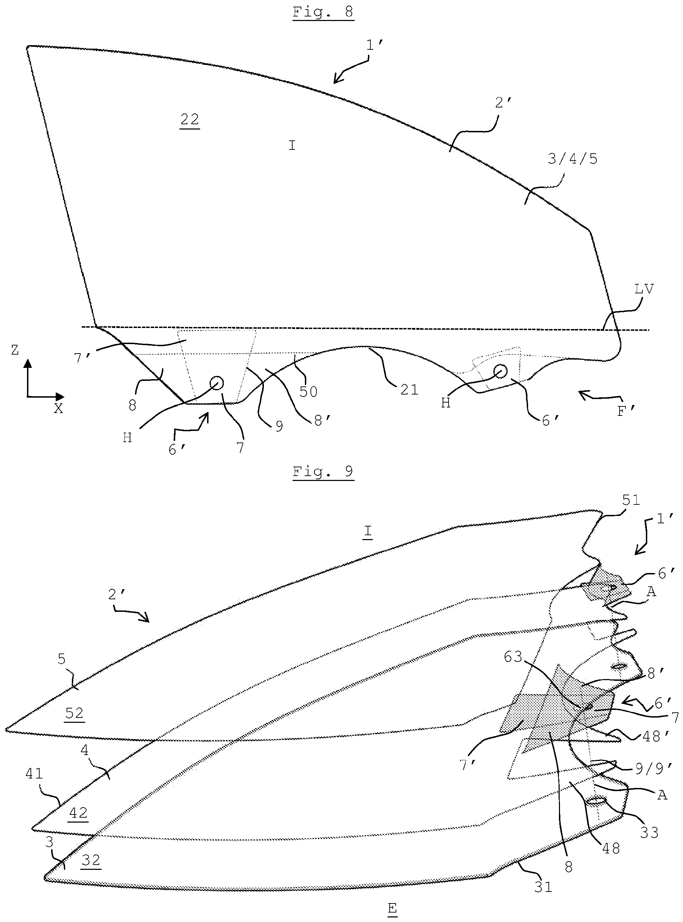

Dans l'exemple de réalisation du vitrage illustré à la figure 9B de de document, un insert est fixé à la feuille de verre intérieure par collage, avec une patte de l'insert qui vient coopérer avec la face intérieure de la feuille en verre intérieure. Cependant, une telle patte forme localement une surépaisseur, un renflement, par rapport à la feuille intérieure de sorte que l'insert selon l'exemple de réalisation de la figure 9B présente l'inconvénient d'augmenter l'encombrement du vitrage.

Or, l'encombrement du vitrage feuilleté est une caractéristique importante pour un vitrage latéral compte tenu de son implantation dans l'espace contraint que constitue une portière d'un véhicule automobile.

Par ailleurs, l'encombrement du vitrage est également une caractéristique importante lorsqu'une interchangeabilité entre un vitrage latéral de type feuilleté et un vitrage latéral de type monolithique est souhaitée par le constructeur automobile afin de standardiser les moyens de liaison et le dispositif d'entraînement associé. Le document WO 2014/029605 A1 divulgue un autre exemple du vitrage de véhicule connu.

La présente invention entend remédier aux inconvénients de l'art antérieur et vise plus particulièrement et préférentiellement un vitrage muni d'au moins un porte-vitre très compact et très léger, tout en étant très solide et très bien fixé et attaché à la vitre.

La présente invention entend proposer une solution grâce à laquelle l'épaisseur du vitrage dans la zone de fixation est identique à l'épaisseur du vitrage dans la partie visible du vitrage ; il n'y a donc pas de surépaisseur dans la zone de fixation.

Ainsi, lorsqu'une série de véhicule prévoit pour certains modèles de la série des vitres feuilletées et pour d'autres modèles de la série des vitres monolithiques, des moyens de liaison et un dispositif d'entraînement identiques pour les deux séries peuvent être utilisés.

La présente invention entend par ailleurs constituer une solution pour une fixation du porte-vitre « en temps masqué », pendant l'opération de feuilletage par laquelle la vitre feuilletée est constituée.

La présente invention entend constituer une solution particulièrement compacte et fiable pour une vitre bombée.

A cet effet, l'invention a pour objet un vitrage de de véhicule déplaçable en hauteur selon la revendication 1. Ce vitrage comprend une vitre feuilletée comprenant une feuille de verre extérieure, une feuille de verre intérieure et une feuille intercalaire de matière plastique située entre lesdites deux feuilles de verre, ladite vitre présentant une face extérieure destinée à être orientée vers un espace extérieur, un chant et une face intérieure destinée à être orientée vers un espace intérieur, ledit vitrage présentant une zone de fixation dans laquelle un porte-vitre est fixé à ladite vitre, ladite zone de fixation présentant éventuellement un trou de fixation.

Ledit vitrage est remarquable en ce que ledit porte-vitre comporte :
- une base d'applique présentant une face de base extérieure (de préférence entièrement) au contact d'une face intérieure de ladite feuille de verre extérieure et située dans un logement complémentaire ménagé dans ladite feuille intercalaire de matière plastique, et
- au moins une, et de préférence deux, aile(s) de recouvrement présentant une face d'aile extérieure qui est (de préférence entièrement) au contact d'une face intercalaire intérieure de ladite feuille intercalaire de matière plastique.

Par « attache » ou « attachement » au sens de la présente invention, il faut comprendre les attaches mécaniques, qui s'attachent et se détachent manuellement ou à l'aide d'un outil mécanique. Ce qui est attaché est ainsi dans une position fixe ; l'accrochage, le vissage, l'insertion ou le clipage sont chacun un attachement. L'axe du porte-vitre mentionné précédemment est ainsi un axe d'attachement.

Par « fixation » au sens de la présente invention, il faut comprendre les fixations chimiques, qui engendrent des modifications moléculaires irréversibles, sauf à rompre la liaison et à rendre le porte-vitre inutilisable ; le collage est une fixation.

Chacune de ces deux expressions exclut l'autre.

De préférence, pour augmenter la fiabilité de la fixation du porte-vitre à la vitre, deux ailes de recouvrement s'étendent latéralement, respectivement à gauche et à droite de ladite base d'applique (lorsque ledit porte-vitre est considéré verticalement, pour un usage dans un vitrage positionné verticalement).

La base d'applique permet de transmettre et de répartir directement (sans couche intermédiaire) les contraintes subies par le porte-vitre à la feuille de verre extérieure ; l'aile de recouvrement, ou chaque aile de recouvrement, permet de fixer le porte-vitre à la vitre par l'intermédiaire de la feuille intercalaire de matière plastique. Elle est, de préférence, constitué d'un seul matériau.

De préférence, pour que le porte-vitre soit particulièrement compact, ladite base d'applique présente une épaisseur qui est égale à la somme de l'épaisseur de ladite feuille intercalaire de matière plastique et de l'épaisseur de ladite feuille de verre intérieure (l'épaisseur de ladite feuille intercalaire de matière plastique et de ladite feuille de verre intérieure étant généralement constantes).

De préférence, pour que le porte-vitre soit particulièrement compact, ladite aile de recouvrement (ou chaque aile de recouvrement) présente une épaisseur qui est égale à l'épaisseur de ladite feuille de verre intérieure.

De préférence, pour augmenter la fiabilité de l'attachement du porte-vitre à la vitre, ledit porte-vitre comporte une languette d'applique présentant :
- une face de languette extérieure (de préférence entièrement) au contact d'une face intérieure de ladite feuille de verre extérieure et située dans un logement complémentaire ménagée dans ladite feuille intercalaire de matière plastique, et
- une face de languette intérieure (de préférence entièrement) au contact d'une face extérieure de ladite feuille de verre intérieure.

La languette d'applique participe à la bonne transmission et la bonne répartition, directement (sans couche intermédiaire), des contraintes subies par le porte-vitre à la feuille de verre extérieure et à la feuille de verre intérieure.

Ainsi, ladite languette d'applique présente une épaisseur qui est égale à l'épaisseur de ladite feuille intercalaire de matière plastique.

Ladite languette d'applique est, de préférence, située au-dessus de ladite base d'applique (lorsque ledit porte-vitre est considéré verticalement, pour un usage dans un vitrage positionné verticalement et comportant le porte-vitre en bas).

Dans une variante particulière, ladite base d'applique comporte un trou présentant un axe qui est coaxial avec ledit trou de fixation, ledit trou étant de préférence centré latéralement (à gauche et à droite) par rapport à une largeur à cet endroit de ladite base d'applique.

Le vitrage selon l'invention comporte, de préférence, deux porte-vitre.

L'invention a par ailleurs pour objet un procédé de fabrication d'un vitrage de véhicule déplaçable en hauteur selon l'invention, ledit vitrage comprenant une vitre comprenant une feuille de verre extérieure, une feuille de verre intérieure et une feuille intercalaire de matière plastique située entre lesdites deux feuilles de verre, ladite vitre présentant une face extérieure destinée à être orientée vers un espace extérieur, un chant et une face intérieure destinée à être orientée vers un espace intérieur, ledit vitrage présentant une zone de fixation dans laquelle un porte-vitre est fixé à ladite vitre, ladite zone de fixation présentant éventuellement un trou de fixation.

Ledit procédé est remarquable en ce que
- une face de base extérieure de ladite base d'applique est appliquée (de préférence entièrement) au contact d'une face intérieure de ladite feuille de verre extérieure et est positionnée dans le logement complémentaire ménagée dans ladite feuille intercalaire de matière plastique, et
- au moins une, et de préférence de deux, face(s) d'aile extérieure(s) d'une aile de recouvrement est positionnée (de préférence entièrement) au contact d'une face intercalaire intérieure de ladite feuille intercalaire de matière plastique, puis
- une étape de feuilletage est mise en œuvre pour réaliser ladite vitre feuilletée.

Dans une variante, préalablement à ladite étape de feuilletage :
- une face de languette extérieure d'une languette d'applique est appliquée (de préférence entièrement)au contact d'une face intérieure de ladite feuille de verre extérieure et est positionnée dans un logement complémentaire ménagée dans ladite feuille intercalaire de matière plastique, et
- une face de languette intérieure de ladite languette d'applique est appliquée (de préférence entièrement) au contact d'une face extérieure de ladite feuille de verre intérieure.

Avantageusement, la présente invention permet de fixer un porte-vitre à un vitrage d'une manière fiable et compacte. Une solution d'attachement et de fixation compacte permet de réduire la hauteur et/ou l'épaisseur du porte-vitre, c'est-à-dire respectivement selon l'axe vertical Z du véhicule et selon l'axe latéral Y du véhicule pour un vitrage latéral ; cela permet donc de diminuer l'espace nécessaire à l'intérieur de la portière et ainsi d'augmenter le volume disponible à l'intérieur du véhicule. Cela permet en outre d'alléger le vitrage.

Les figures qui suivent illustrent l'invention de manière non-limitative.
[Fig 1] illustre une vue de face, de l'intérieur, d'un premier vitrage selon l'invention muni de deux porte-vitres.
[Fig 2] illustre une vue en perspective éclatée, du vitrage de la figure 1.
[Fig 3] illustre une vue partielle, de face, de l'intérieur, d'un porte-vitre de la figure 1.
[Fig 4] illustre une vue en coupe horizontale selon B-B' de la figure 3.
[Fig 5] illustre une vue en coupe verticale selon C-C' de la figure 3.
[Fig 6] illustre une vue de face du porte-vitre utilisé en figure 3.
[Fig 7] illustre une vue en perspective du porte-vitre utilisé en figure 3.
[Fig 8] illustre une vue de face, de l'intérieur, d'un second vitrage selon l'invention muni de deux porte-vitres.
[Fig 9] illustre une vue en perspective éclatée, du vitrage de la figure 8.
[Fig 10] illustre une vue partielle, de face, de l'intérieur, d'un porte-vitre de la figure 8.
[Fig 11] illustre une vue en coupe horizontale selon D-D' de la figure 10.
[Fig 12] illustre une vue en coupe verticale selon G-G' de la figure 10.
[Fig 13] illustre une vue de face du porte-vitre utilisé en figure 10.
[Fig 14] illustre une vue en perspective du porte-vitre utilisé en figure 10.

Les éléments représentés sont à l'échelle les uns par rapport aux autres sur chaque figure ; les éléments en arrière-plan ne sont en général pas représentés.

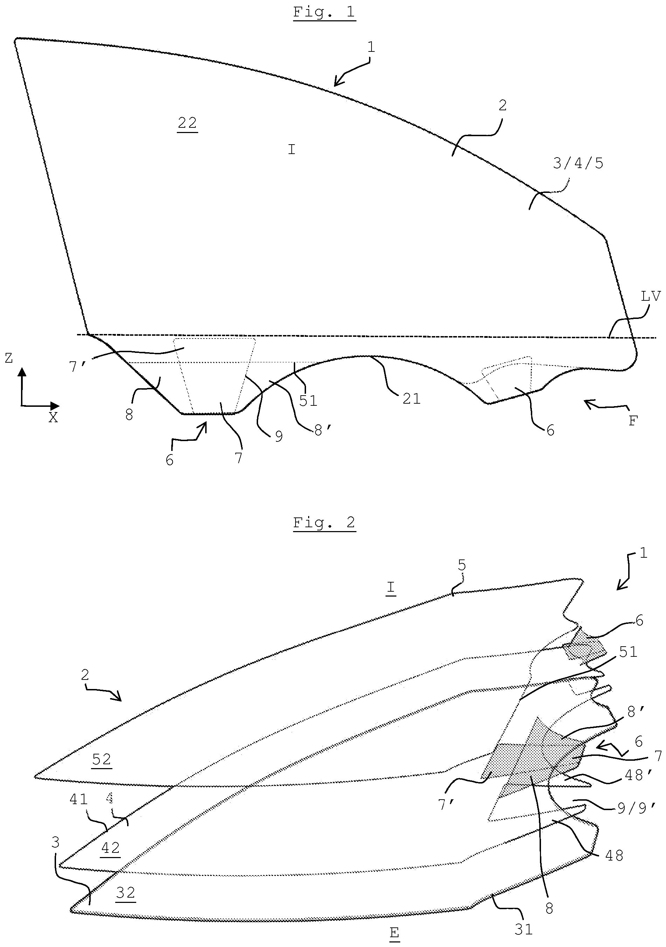

La présente invention se rapporte à un vitrage 1, 1', tel que visible respectivement en figure 1 et 8, et en vues éclatées en figures 2 et 9, comprenant une vitre 2, 2'. La vitre 2, 2' est ici feuilletée et comprend une feuille de verre extérieure 3, une feuille de verre intérieure 5 et une feuille intercalaire de matière plastique 4 située entre lesdites deux feuilles de verre, et au contact de ces deux feuilles de verre.

La présente invention est décrite à titre d'exemple dans le cadre d'une application comme vitrage de véhicule, ce vitrage réalisant une séparation entre un espace extérieur E qui est extérieur au véhicule et un espace intérieur I qui est intérieur au véhicule. Les notions de « face extérieure » et « face intérieure » sont donc considérées par rapport respectivement à cet espace extérieur E et cet espace intérieur I.

La présente invention est décrite en particulier en étant appliquée à un vitrage latéral de véhicule et plus précisément dans le cadre d'une application à un vitrage latéral de porte de véhicule qui est déplaçable en hauteur, selon la verticale ; les figures 1 et 8 étant une vue de face, de l'espace intérieur I, du vitrage 1, 1' avant son installation dans une porte.

Dans le cadre du présent document, la notion de verticalité est introduite en référence à l'axe vertical Z d'un véhicule ; l'axe longitudinal horizontal central d'avancé du véhicule équipé du vitrage selon l'invention en tant que vitrage latéral, étant l'axe généralement appelé l'axe X du véhicule, tel que visible en figures 1 et 8 et l'axe latéral horizontal étant l'axe Y (non illustré).

Le vitrage 1, 1' est destiné à fermer une baie qui est ici ménagée dans une porte du véhicule, non illustrée.

La vitre 2, 2' du vitrage 1, 1' ne peut être une vitre monolithique, constituée d'une seule feuille de verre mais est ici une vitre feuilletée qui comporte, de l'intérieur vers l'extérieur et au contact, au moins : la feuille de verre extérieure 3, la feuille intercalaire de matière plastique 4 et la feuille de verre intérieure 5 ; toutefois, il est possible qu'au moins une autre feuille soit intercalée entre la feuille de verre extérieure 3 et la feuille intercalaire de matière plastique 4 ou entre la feuille intercalaire de matière plastique 4 et la feuille de verre intérieure 5.

La vitre 2, 2' est, de préférence, constituée uniquement de la feuille de verre extérieure 3, de la feuille intercalaire de matière plastique 4 et de la feuille de verre intérieure 5 afin d'être plus compacte.

La vitre 2, 2' présente une face extérieure 20 qui est orientée vers l'espace extérieur E, une face intérieure 22 qui est orientée vers l'espace intérieur I et un chant situé entre ces deux faces. Elle est ici bombée.

La feuille de verre extérieure 3 présente une face extérieure 30 qui est confondue avec la face extérieure 20 de la vitre 2, 2', une face intérieure 32 qui est orientée vers la feuille intercalaire de matière plastique 4, un chant 31 situé entre ces deux faces et une épaisseur e₃ sensiblement constate, de préférence dans la plage allant de 1,60 mm à 3,45 mm, par exemple ici de 3,45 mm.

La feuille de verre intérieure 5 présente une face extérieure 50 qui est orientée vers la feuille intercalaire de matière plastique 4, une face intérieure 52 qui est confondue avec la face intérieure 22 de la vitre 2, 2' ; un chant 51 situé entre ces deux faces et une épaisseur e₅ sensiblement constate, de préférence dans la plage allant de 0,70 mm à 1,40 mm, par exemple ici de 0,70 mm.

La feuille intercalaire de matière plastique 4 présente une face intercalaire extérieure 40 qui est orientée vers la face intérieure 32 et qui est ici au contact de cette face intérieure 32, une face intercalaire intérieure 42 qui est orientée vers la face extérieure 50 et qui est ici au contact de cette face extérieure 50, un chant 41 qui est situé entre ces deux faces intercalaires et une épaisseur e₄ sensiblement constate, par exemple de 0,78 mm. Elle est ici en polyvinibutyral.

Le vitrage présente deux parties : une partie supérieure, visible, et une partie inférieure, non-visible, à l'état installé ; cette partie inférieure se trouve toujours cachée à l'intérieur de la porte, quel que soit l'état du vitrage (ouvert, fermé, ou entre les deux). La limite de visibilité, qui sépare les deux parties, est matérialisée par une ligne LV.

Dans la partie visible du vitrage, le chant de la vitre correspond ainsi au chant 31 de la feuille de verre extérieure 3, au chant 41 de la feuille intercalaire de matière plastique 4 et au chant 51 de la feuille de verre intérieure 5, ces trois chants étant ici sensiblement dans la continuité l'un de l'autre, à plus ou moins 1 millimètre.

Dans la partie non-visible du vitrage, sous la ligne LV, le vitrage 1, 1' présente une zone de fixation F, F' dans laquelle au moins un porte-vitre 6, 6' est fixé respectivement à la vitre 2, 2'.

Dans cette zone de fixation, la vitre 2, 2' n'est pas complètement feuilletée : les trois éléments constituant a minima le feuilletage ne sont pas tous présents sur toute la surface de la zone de fixation F, F', comme détaillé plus loin.

Le vitrage 1, 1' comporte, outre la vitre 2, 2', près d'un bord (ici le bord longitudinal bas), au moins un, et de préférence deux, porte-vitre 6, 6', supportant la vitre 2, 2' à l'état installé.

Ce porte-vitre 6, 6' est destiné à permettre d'accueillir un élément d'attachement, non représenté, qui a pour but de permettre d'attacher le porte-vitre dans un système de déplacement pour lever et baisser le vitrage.

Pour faciliter le déplacement du vitrage en hauteur, un second porte-vitre est de préférence positionné dans la zone de fixation F, F' ; le vitrage 1, 1', dans sa configuration d'utilisation, comporte ainsi de préférence deux porte-vitre.

Deux variantes principales de réalisation de la fixation sont présentées ici :
- dans une première variante, illustrée aux figures 1 à 7, la zone de fixation F ne comporte aucun trou et les porte-vitre 6 ne présente en conséquence aucun trou, et
- dans une seconde variante, illustrée aux figures 8 à 14, la zone de fixation F' présente deux trous de fixation H ; chacun des deux porte-vitre 6 présente un trou de fixation 63.

Ainsi, ce qui distingue les porte-vitre 6 des porte-vitre 6' c'est la présence d'un trou de fixation 63.

Dans la première variante, les deux porte-vitre 6 ne sont pas exactement identiques mais ils présentent la même forme générale, sans trou ; c'est pour cela qu'ils portent la même référence. La vitre 2 de cette première variante ne comporte pas de trou.

Dans la seconde variante, les deux porte-vitre 6' ne sont pas exactement identiques mais ils présentent la même forme générale, avec un trou ; c'est pour cela qu'ils portent la même référence. La vitre 2' de cette seconde variante comporte deux trous 33.

Bien que cela ne soit pas illustré, il est tout à fait possible qu'une zone de fixation d'un vitrage comporte un porte-vitre 6 sans trou et un porte-vitre 6' avec trou.

Les porte-vitre 6, 6' ont été grisés sur les figures 2 et 9 pour faciliter la visualisation de leurs formes et leurs positionnements.

Le porte-vitre 6, 6' comporte :
- une base d'applique 7 présentant une face d'applique extérieure 70, qui est orientée vers l'espace extérieur E, une face d'applique intérieure 72 qui est orientée vers l'espace intérieur I, un chant situé entre ces deux faces et une épaisseur e₇ sensiblement constate, et
- au moins une, et de préférence deux, aile(s) de recouvrement 8, 8' présentant une face d'aile extérieure 80 qui est orientée vers l'espace extérieur E, une face d'aile intérieure 82 qui est orientée vers l'espace intérieur I, un chant situé entre ces deux faces et une épaisseur e₈, e_{8'} sensiblement constate.

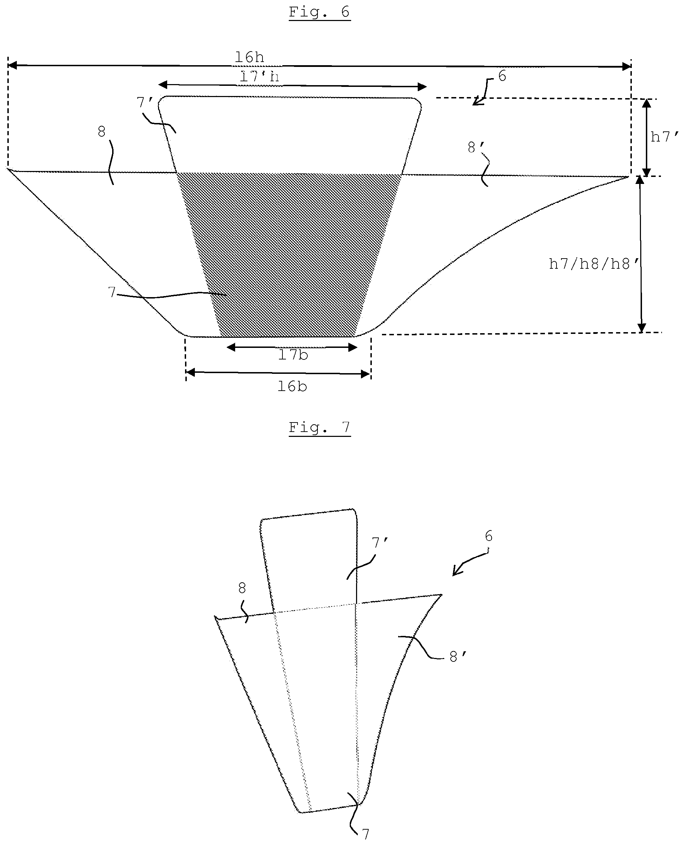

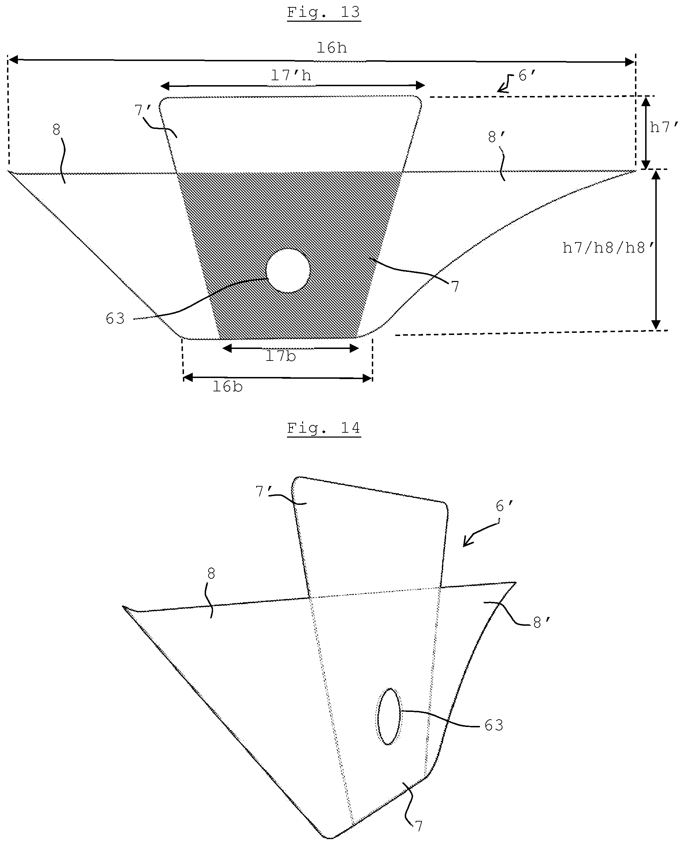

La base d'applique 7 a été grisée sur les figures 6 et 13 pour faciliter la visualisation de sa forme et son positionnement.

La base d'applique 7 est située dans un logement 9 de forme complémentaire au pourtour de la base d'applique 7 et qui est ménagé dans la feuille intercalaire de matière plastique 4. Le logement 9 est un enlèvement (une absence) de la feuille intercalaire de matière plastique 4 sur toute son épaisseur. De chaque côté du logement 9, la feuille intercalaire de matière plastique 4 est présente et réalise une avancé 48, 48', qui va dans le sens vertical, jusqu'à un bord bas 25 de la vitre 2, 2'.

La face d'applique extérieure 70 est au contact sur toute sa surface avec la face intérieure 32 de la feuille de verre extérieure 3.

La face d'applique intérieure 72 se trouve dans le prolongement de la face intérieure 52 de la feuille de verre intérieur.

La face d'aile extérieure 80, 80' est au contact sur toute sa surface avec la face intercalaire intérieure 42 de la feuille intercalaire de matière plastique 4 ; l'aile de recouvrement repose ainsi et adhère à la feuille intercalaire de matière plastique 4.

La face d'aile extérieure 82, 82' se trouve dans le prolongement de la face intérieure 52 de la feuille de verre intérieur.

La feuille intercalaire de matière plastique 4 est donc présente en vis-à-vis de l'aile de recouvrement 8, 8', et de préférence des deux ailes de recouvrement 8, 8', et est absente en vis-à-vis de la base d'applique 7.

Le porte-vitre 6, 6' est ainsi fixé à la vitre 2, 2' et adhère à la vitre 2, 2' grâce à l'aile de recouvrement 8, 8' ou aux ailes de recouvrement 8, 8' lorsqu'il y en a plusieurs, qui est (ou sont) collée(s) par la feuille intercalaire de matière plastique 4.

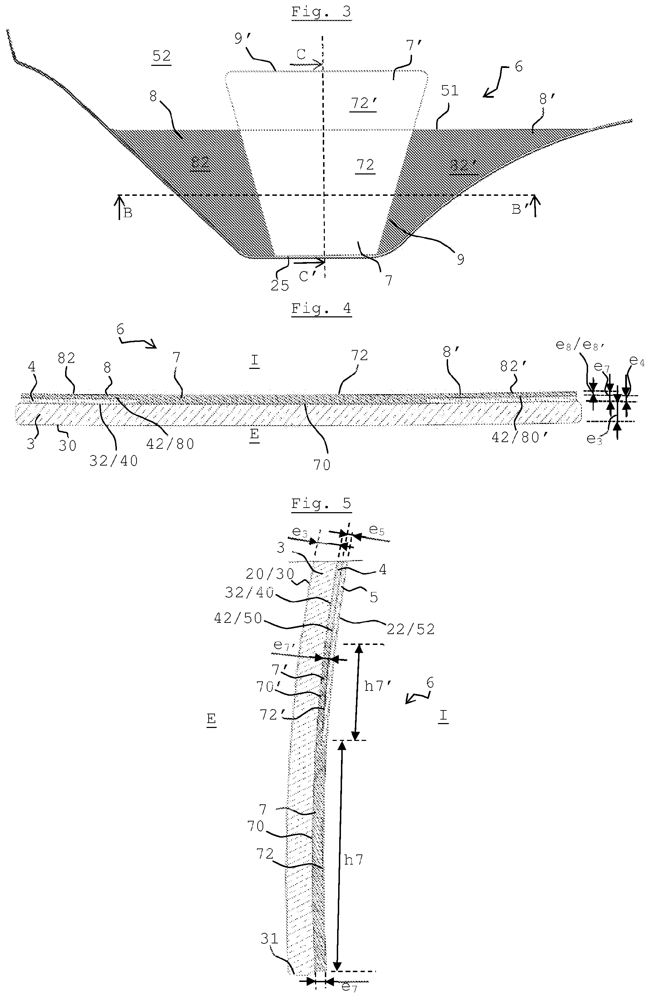

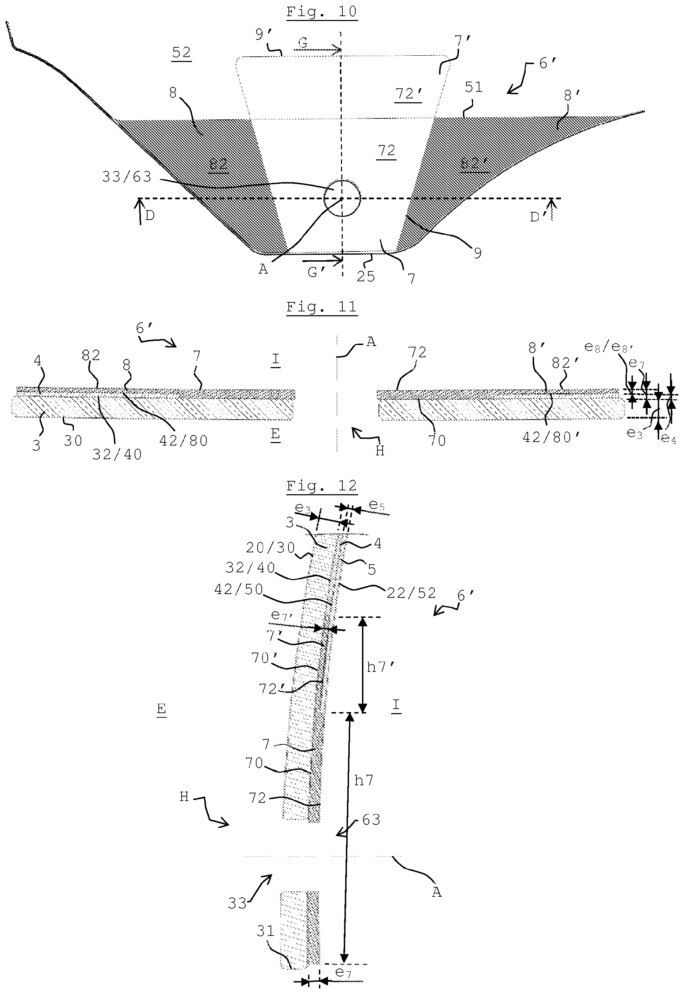

Le porte-vitre 6, 6' comporte ici deux ailes de recouvrement 8, 8' qui s'étendent latéralement, respectivement à gauche et à droite de la base d'applique 7. Ces ailes de recouvrement 8, 8' ont été grisées sur les figures 3 et 10 pour faciliter la visualisation de leurs formes et leurs positionnements.

L'épaisseur de base e₇ de la base d'applique 7 est égale à la somme de l'épaisseur e₄ de la feuille intercalaire de matière plastique 4 et de l'épaisseur e₅ de ladite feuille de verre intérieure 5.

L'épaisseur d'aile, respectivement e₈, e_{8'} de l'aile de recouvrement 8, 8' est égale pour chacune à l'épaisseur e₅ de la feuille de verre intérieure 5.

L'aile de recouvrement 8, 8' (ou chaque l'aile de recouvrement 8, 8') présente une hauteur h8, h8' identique à la hauteur de la base d'applique 7. Cette hauteur correspond à la distance entre l'extrémité basse du chant 51 de la feuille de verre intérieure et le bord bas 25 de la vitre 2, 2'. Elle est ici de 85 mm.

La largeur en bas, au plus étroit, 17b de la base d'applique 7 est 69 mm.

Le porte-vitre 6, 6' comporte en outre ici une languette d'applique 7' présentant une face de languette extérieure 70', qui est orientée vers l'espace extérieur E, une face de languette intérieure 72 qui est orientée vers l'espace intérieur, un chant situé entre ces deux faces et une épaisseur sensiblement constante e_{7'}.

La languette d'applique 7' est située dans un logement 9' de forme complémentaire au pourtour de la languette d'applique 7' et qui est ménagé dans la feuille intercalaire de matière plastique 4. Le logement 9' est un enlèvement (une absence) de la feuille intercalaire de matière plastique 4 sur toute son épaisseur. Le logement 9' est dans la continuité du logement 9, au-dessus ; ils forment ensemble un seul logement.

La face de languette extérieure 70' est au contact sur toute sa surface avec la face intérieure 32 de la feuille de verre extérieure 3.

La face de languette intérieure 72' est au contact sur toute sa surface avec la face extérieure 50 de la feuille de verre intérieure 5.

L'épaisseur e_{7'} de la languette d'applique 7' est égale à l'épaisseur e₄ de la feuille intercalaire de matière plastique 4.

La languette d'applique 7' est située au-dessus de la base d'applique 7 et est liée à la base d'applique 7. Comme visible en particulier sur les figures 5 et 12, la languette d'applique 7' est insérée entre la feuille de verre extérieure 3 et la feuille de verre intérieure 5. Elle participe au positionnement et à l'attachement du porte-vitre 6, 6' à la vitre 2, 2'.

La languette d'applique 7' présente une hauteur h7' qui est ici de 40 mm et une largeur en haut, au plus large, 17'h de 137 mm.

Le porte-vitre présente une hauteur totale égale à la somme de la hauteur h7 de la base d'applique 7 et de la hauteur h7' de la languette d'applique 7' ; elle est ici de 125 mm. Le porte-vitre présente une largeur totale 16h, égale à la somme de la largeur de la base d'applique 7 au plus large et de la largeur des ailes de recouvrement 8, 8' au plus large ; elle est ici de 324 mm. Le porte-vitre présente une largeur minimale, ici au plus bas, 16b de 95 mm.

Dans la seconde variante, le vitrage 1' est destiné à être déplaçable en hauteur et la feuille extérieure 3 comporte pour cela au moins un trou 33, tubulaire, débouchant sur les deux faces de la feuille extérieure 3, la face extérieure 30 et la face intérieure 32. Ce trou 33 présente un axe et présente une section interne circulaire ; il ne débouche pas sur le chant 31 de la feuille extérieure 3 : il est complètement de section circulaire et ce n'est pas une encoche.

Dans cette seconde variante, la base d'applique 7 comporte un trou 63 présentant un axe qui est coaxial avec le trou 33 de la feuille de verre extérieure 3. Ce trou 63 est ici centré par rapport à la largeur de la base d'applique 7 à cet endroit.

La fixation et l'attachement mécanique du porte-vitre 6, 6' à la vitre 2, 2' est opéré de la manière suivante :
- la face de base extérieure 70 de la base d'applique 7 est positionnée dans le logement 9 complémentaire ménagée dans la feuille intercalaire de matière plastique 4 et est appliquée entièrement au contact de la face intérieure 32 de la feuille de verre extérieure 3 et,
- au moins une, et de préférence de deux, face(s) d'aile extérieure(s) 80, 80' des ailes de recouvrement 8, 8' est positionnée entièrement au contact de la face intercalaire intérieure 42 de la feuille intercalaire de matière plastique 4, puis
- une étape de feuilletage est mise en œuvre pour réaliser ladite vitre 2, 2' feuilletée.

Pour le cas où une languette d'applique 7' est présente, préalablement au feuilletage :
- la face de languette extérieure 70' de la languette d'applique 7' est positionnée dans le logement 9' complémentaire ménagée dans la feuille intercalaire de matière plastique 4, et est appliquée entièrement au contact de la face intérieure 32 de la feuille de verre extérieure 3 et
- la face de languette intérieure 72' de la languette d'applique 7' est appliquée entièrement au contact de la face extérieure 50 de la feuille de verre intérieure 5.

Le porte-vitre peut être constitué de deux éléments : la base d'applique 7 et une aile de recouvrement 8, 8' ; sans autre élément.

Le porte-vitre peut être constitué de trois éléments : la base d'applique 7 et deux ailes de recouvrement 8, 8', sans autre élément ; ou encore la base d'applique 7, une aile de recouvrement 8, 8' et la languette d'applique 7'.

Le porte-vitre peut être constitué de quatre éléments : la base d'applique 7, deux ailes de recouvrement 8, 8' et la languette d'applique 7'.

La base d'applique 7 et la (ou les) aile(s) de recouvrement 8, 8' avec en outre éventuellement la languette d'applique 7' sont de préférence ensemble d'un seul tenant et de préférence encore en un seul matériau ; ils sont rigides ; ils peuvent être en matière plastique ou métal ou encore en alliage métallique. Avantageusement, le porte-vitre réalise un insert ; il peut être en une matière plastique, notamment en polyamide (PA) par exemple du PA 6-6, en polyoxyméthylène (POM) (*aussi appelé polyformaldéhyde ou polyacétal*), en polybutylène téréphtalate (PBT), en polyéthylène téréphtalate (PET) ; il est alors particulièrement léger et résistant. Avantageusement, le matériau du porte-vitre présente une dureté Shore D qui est comprise entre 70 et 90.

Le porte-vitre 6, 6' ne comportent aucune partie s'étendant selon l'orientation intérieur-extérieur plus à l'intérieur que la face intérieure 52 de la feuille de verre intérieure 5. Il ne comporte aucune partie s'étendant selon l'orientation intérieur-extérieur plus à l'extérieur que la face extérieure 30 de la feuille de verre extérieure 3 ; de préférence, il ne comporte aucune partie s'étendant plus à l'extérieur que la face intérieure 32 de la feuille de verre extérieure 3. Il ne comporte aucune partie s'étendant dans la direction verticale plus bas que le chant 31 de la feuille de verre extérieure 3.

Le porte-vitre 6, 6' est particulièrement compact ; son épaisseur au plus épais est celle de la vitre feuilletée, au plus épais.

Le porte-vitre 6, 6' se présente sous la forme générale d'un agencement de plaques (base d'applique 7, aile(s) de recouvrement 8, 8', languette d'applique 7') ; ces plaques ne sont pas plates si la vitre 2, 2' est courbe dans la zone de fixation F, F' ; Le porte-vitre 6, 6' est adapté à la courbure de la vitre 2, 2', le cas échéant et cette adaptation est particulière précise du fait que la base d'applique est contre la feuille de verre extérieure.

## Revendications

1. Vitrage (1, 1') de véhicule déplaçable en hauteur comprenant une vitre (2, 2') feuilletée comprenant une feuille de verre extérieure (3), une feuille de verre intérieure (5) et une feuille intercalaire de matière plastique (4) située entre lesdites deux feuilles de verre, ladite vitre (2, 2') présentant une face extérieure (20) destinée à être orientée vers un espace extérieur (E), un chant et une face intérieure (22) destinée à être orientée vers un espace intérieur (I), ledit vitrage (1, 1") présentant une zone de fixation (F, F') dans laquelle un porte-vitre (6, 6') est fixé à ladite vitre (2, 2'), ladite zone de fixation (F') présentant éventuellement un trou de fixation (H), ledit porte-vitre (6, 6') comportant une base d'applique (7) présentant une face de base extérieure (70) au contact d'une face intérieure (32) de ladite feuille de verre extérieure (3) et située dans un logement (9) complémentaire ménagé dans ladite feuille intercalaire de matière plastique (4), **caractérisé en ce que** ledit porte-vitre comporte en outre au moins une, et de préférence deux, aile(s) de recouvrement (8, 8') présentant une face d'aile extérieure (80) qui est au contact d'une face intercalaire intérieure (42) de ladite feuille intercalaire de matière plastique (4).

2. Vitrage (1) selon la revendication 1, dans lequel deux ailes de recouvrement (8, 8') s'étendent latéralement, respectivement à gauche et à droite de ladite base d'applique (7).

3. Vitrage (1) selon la revendication 1 ou 2, dans lequel ladite base d'applique (7) présente une épaisseur de base (e₇) qui est égale à la somme de l'épaisseur (e₄) de ladite feuille intercalaire de matière plastique (4) et de l'épaisseur (e₅) de ladite feuille de verre intérieure (5).

4. Vitrage (1) selon l'une quelconque des revendications 1 à 3, dans lequel ladite aile de recouvrement (8, 8') présente une épaisseur d'aile (e₈, e_{8'}) qui est égale à l'épaisseur (e₅) de ladite feuille de verre intérieure (5).

5. Vitrage (1) selon l'une quelconque des revendications 1 à 4, dans lequel ledit porte-vitre (6, 6') comporte une languette d'applique (7') présentant :
- une face de languette extérieure (70') au contact d'une face intérieure (32) de ladite feuille de verre extérieure (3) et située dans un logement (9') complémentaire ménagée dans ladite feuille intercalaire de matière plastique (4), et
- une face de languette intérieure (72') au contact d'une face extérieure (50) de ladite feuille de verre intérieure (5).

6. Vitrage (1) selon la revendication 5, dans lequel ladite languette d'applique (7') est située au-dessus de ladite base d'applique (7).

7. Vitrage (1) selon l'une quelconque des revendications 1 à 6, dans lequel ladite base d'applique (7) comporte un trou (63) présentant un axe qui est coaxial avec ledit trou de fixation (H), ledit trou (63) étant de préférence centré latéralement par rapport à une largeur à cet endroit de ladite base d'applique (7).

8. Procédé de fabrication d'un vitrage (1, 1') de véhicule déplaçable en hauteur selon l'une quelconque des revendications 1 à 7, ledit vitrage (1, 1') comprenant une vitre (2, 2') comprenant une feuille de verre extérieure (3), une feuille de verre intérieure (5) et une feuille intercalaire de matière plastique (4) située entre lesdites deux feuilles de verre, ladite vitre présentant une face extérieure (20) destinée à être orientée vers un espace extérieur (E), un chant et une face intérieure (22) destinée à être orientée vers un espace intérieur (I), ledit vitrage (1, 1') présentant une zone de fixation (F, F') dans laquelle un porte-vitre (6, 6') est fixé à ladite vitre, ladite zone de fixation (F') présentant éventuellement un trou de fixation (H), **caractérisé en ce que**
- une face de base extérieure (70) de ladite base d'applique (7) est appliquée au contact d'une face intérieure (32) de ladite feuille de verre extérieure (3) et est positionnée dans le logement (9) complémentaire ménagée dans ladite feuille intercalaire de matière plastique (4), et
- au moins une, et de préférence de deux, face(s) d'aile extérieure(s) (80, 80') d'une aile de recouvrement (8, 8') est positionnée au contact d'une face intercalaire intérieure (42) de ladite feuille intercalaire de matière plastique (4), puis
- une étape de feuilletage est mise en œuvre pour réaliser ladite vitre (2, 2') feuilletée.

9. Procédé selon la revendication 8, dans lequel, préalablement à ladite étape de feuilletage :
- une face de languette extérieure (70') d'une languette d'applique (7') est appliquée au contact d'une face intérieure (32) de ladite feuille de verre extérieure (3) et est positionnée dans un logement (9') complémentaire ménagée dans ladite feuille intercalaire de matière plastique (4), et
- une face de languette intérieure (72') de ladite languette d'applique (7') est appliquée au contact d'une face extérieure (50) de ladite feuille de verre intérieure (5).

## Patentansprüche

1. Höhenverschiebbare Fahrzeugverglasung (1, 1'), umfassend eine Verbundscheibe (2, 2'), umfassend eine äußere Glasscheibe (3), eine innere Glasscheibe (5) und eine Zwischenlagenscheibe aus Kunststoffmaterial (4). die sich zwischen den zwei Glasscheiben befindet, wobei die Scheibe (2, 2') eine äußere Fläche (20), die dazu bestimmt ist, zu einem äußeren Raum (E) ausgerichtet zu sein, eine Kante und eine innere Fläche (22) aufweist, die dazu bestimmt ist, zu einem inneren Raum (I) ausgerichtet zu sein, wobei die Verglasung (1, 1') eine Befestigungszone (F, F') aufweist, in der ein Scheibenträger (6, 6') an der Scheibe (2, 2') befestigt ist, wobei die Befestigungszone (F') optional ein Befestigungsloch (H) aufweist, wobei der Scheibenträger (6, 6') eine Anbringungsbasis (7) vorweist, die eine äußere Basisfläche (70) aufweist, die in Kontakt mit einer inneren Fläche (32) der äußeren Glasscheibe (3) ist und sich in einer komplementären Aufnahme (9) befindet, die in der Zwischenlagenscheibe aus Kunststoffmaterial (4) vorgesehen ist, **dadurch gekennzeichnet, dass** der Scheibenträger ferner mindestens einen und vorzugsweise zwei Abdeckflügel (8, 8') vorweist, die eine äußere Flügelfläche (80) aufweisen, die mit einer inneren Zwischenlagenfläche (42) der Zwischenlagenscheibe aus Kunststoffmaterial (4) in Kontakt steht.

2. Verglasung (1) nach Anspruch 1, wobei sich zwei Abdeckflügel (8, 8') seitlich links beziehungsweise rechts von der Anbringungsbasis (7) erstrecken.

3. Verglasung (1) nach Anspruch 1 oder 2, wobei die Anbringungsbasis (7) eine Basisdicke (e₇) aufweist, die gleich der Summe der Dicke (e₄) der Zwischenlagenscheibe aus Kunststoffmaterial (4) und der Dicke (e₅) der inneren Glasscheibe (5) ist.

4. Verglasung (1) nach einem der Ansprüche 1 bis 3, wobei der Abdeckflügel (8, 8') eine Flügeldicke (e₈, e_{8'}) aufweist, die gleich der Dicke (e₅) der inneren Glasscheibe (5) ist.

5. Verglasung (1) nach einem der Ansprüche 1 bis 4, wobei der Glasträger (6, 6') eine Anbringungslasche (7') vorweist, die aufweist:
- eine äußere Laschenfläche (70'), die mit einer inneren Fläche (32) der äußeren Glasscheibe (3) in Kontakt steht und sich in einer komplementären Aufnahme (9') befindet, die in der Zwischenlagenscheibe aus Kunststoffmaterial (4) vorgesehen ist, und
- eine innere Laschenfläche (72'), die mit einer äußeren Fläche (50) der inneren Glasscheibe (5) in Kontakt steht.

6. Verglasung (1) nach Anspruch 5, wobei sich die Anbringungslasche (7') oberhalb der Anbringungsbasis (7) befindet.

7. Verglasung (1) nach einem der Ansprüche 1 bis 6, wobei die Anbringungsbasis (7) ein Loch (63) vorweist, das eine Achse aufweist, die koaxial zu dem Befestigungsloch (H) ist, wobei das Loch (63) vorzugsweise seitlich relativ zu einer Breite an dieser Stelle der Anbringungsbasis (7) zentriert ist.

8. Verfahren zum Herstellen einer höhenverschiebbaren Fahrzeugverglasung (1, 1') nach einem der Ansprüche 1 bis 7, die Verglasung (1, 1') umfassend eine Scheibe (2, 2'), umfassend eine äußere Glasscheibe (3), eine innere Glasscheibe (5) und eine Zwischenlagenscheibe aus Kunststoffmaterial (4), die sich zwischen den zwei Glasscheiben befindet, wobei die Scheibe eine äußere Fläche (20), die dazu bestimmt ist, zu einem äußeren Raum (E) ausgerichtet zu sein, eine Kante und eine innere Fläche (22) aufweist, die dazu bestimmt ist, zu einem inneren Raum (I) ausgerichtet zu sein, wobei die Verglasung (1, 1') eine Befestigungszone (F, F') aufweist, in der ein Scheibenträger (6, 6') an der Scheibe befestigt wird, wobei die Befestigungszone (F') optional ein Befestigungsloch (H) aufweist, **dadurch gekennzeichnet, dass**
- eine äußere Basisfläche (70) der Anbringungsbasis (7) in Kontakt mit einer inneren Fläche (32) der äußeren Glasscheibe (3) angebracht und in der komplementären Aufnahme (9) positioniert wird, die in der Zwischenlagenscheibe aus Kunststoffmaterial (4) vorgesehen ist, und
- mindestens eine und vorzugsweise zwei äußere Flügelfläche(n) (80, 80') eines Abdeckflügels (8, 8') in Kontakt mit einer inneren Zwischenlagenfläche (42) der Zwischenlagenscheibe (4) aus Kunststoff positioniert wird, dann
- ein Laminierungsschritt zum Fertigen der Verbundscheibe (2, 2') implementiert wird.

9. Verfahren nach Anspruch 8, wobei vor dem Laminierungsschritt:
- eine äußere Laschenfläche (70') einer Anbringungslasche (7') in Kontakt mit einer inneren Fläche (32) der äußeren Glasscheibe (3) angebracht und in einer komplementären Aufnahme (9') positioniert wird, die in der Zwischenlagenscheibe aus Kunststoffmaterial (4) vorgesehen ist, und
- eine innere Laschenfläche (72') der Anbringungslasche (7') in Kontakt mit einer äußeren Fläche (50) der inneren Glasscheibe (5) angebracht wird.

## Claims

1. A height-adjustable glazing (1, 1') for a vehicle, comprising a laminated window (2, 2') comprising an exterior glass sheet (3), an interior glass sheet (5) and a interlayer of plastic material (4) located between said two glass sheets, said window (2, 2') having an external face (20) intended to be oriented towards an exterior space (E), an edge and an internal face (22) intended to be oriented towards an interior space (I), said glazing (1, 1') having a fixing zone (F, F') wherein a window-holder (6, 6') is fixed to said window (2, 2'), said fixing zone (F') optionally having a fixing hole (H), said window-holder (6, 6') comprising a base plate (7) having an external base face (70) which is in contact with an internal face (32) of said exterior glass sheet (3) and located in a complementary recess (9) in said plastic interlayer (4), **characterized in that said** window-holder comprises moreover at least one, and preferably two, cover flange(s) (8, 8') having an external flange face (80) which is in contact with an internal interlayer face (42) of said plastic interlayer (4).

2. The glazing (1) according to claim 1, wherein two cover flanges (8, 8') extend laterally, respectively to the left and to the right of said support base (7).

3. The glazing (1) according to claim 1 or 2, wherein said support base (7) has a base thickness (e₇) which is equal to the sum of the thickness (e₄) of said plastic interlayer (4) and the thickness (e₅) of said interior glass sheet (5).

4. The glazing (1) according to any one of claims 1 to 3, wherein said cover flange (8, 8') has a flange thickness (e₈, e_{8'}) which is equal to the thickness (e₅) of said interior glass sheet (5).

5. The glazing (1) according to any one of claims 1 to 4, wherein said window-holder (6, 6') comprises a support tab (7') having:
- an external tab face (70') in contact with an internal face (32) of said exterior glass sheet (3) and located in a complementary recess (9') provided in said plastic interlayer (4), and
- an internal tab face (72') in contact with an external face (50) of said interior glass sheet (5).

6. The glazing (1) according to claim 5, wherein said support tab (7') is located above said support base (7).

7. The glazing (1) according to any one of claims 1 to 6, wherein said support base (7) comprises a hole (63) having an axis which is coaxial with said fixing hole (H), said hole (63) preferably being laterally centered with respect to a width at that location of said support base (7).

8. A method of manufacturing a height-adjustable glazing (1, 1') of a vehicle according to any one of claims 1 to 7, said glazing (1, 1') comprising a window (2, 2') comprising an exterior glass sheet (3), an interior glass sheet (5), and a plastic interlayer (4) located between said two glass sheets, said window having an external face (20) intended to be oriented towards an exterior space (E), an edge, and an internal face (22) intended to be oriented towards an interior space (I), said glazing (1, 1') having a fixing zone (F, F') wherein a window-holder (6, 6') is fixed to said window, said fixing zone (F') possibly having a fixing hole (H), **characterized in that**
- an external base face (70) of said support base (7) is applied in contact with an internal face (32) of said exterior glass sheet (3) and is positioned in the complementary recess (9) provided in said plastic interlayer (4), and
- at least one, and preferably two, external flange face(s) (80, 80') of a cover flange (8, 8') is positioned in contact with an internal interlayer face (42) of said plastic interlayer (4), and then
- a lamination step is carried out to embody said laminated window (2, 2').

9. The method according to claim 8, wherein, prior to said lamination step:
- an external tab face (70') of a support tab (7') is applied in contact with an internal face (32) of said exterior glass sheet (3) and is positioned in a complementary recess (9') provided in said plastic interlayer (4), and
- an internal tab face (72') of said support tab (7') is applied in contact with an external face (50) of said interior glass sheet (5).
